# EUROPÄISCHE PATENTSCHRIFT

(11) **EP 1 543 310 B1**
(45) Veröffentlichungstag und Bekanntmachung des Hinweises auf die Patenterteilung: **18.05.2011**
(21) Anmeldenummer: 03807817.6
(22) Anmeldetag: 30.08.2003
(51) Int. Cl.: G01M 3/22, B65B 11/52

(54) **VERFAHREN ZUM MESSEN DER DICHTIGKEIT VON FOLIENBEHAELTNISSEN**
METHOD FOR MEASURING THE TIGHTNESS OF FILM-TYPE RECEPTACLES
PROCEDE DE MESURE DE L'ETANCHEITE DE CONTENANTS SOUS FORME DE FEUILLES

(30) Priorität: 17.09.2002 DE 10243255
(43) Veröffentlichungstag der Anmeldung: 22.06.2005
(73) Patentinhaber: Boehringer Ingelheim Pharma GmbH & Co.KG, 55216 Ingelheim am Rhein (DE)
(72) Erfinder: KLEIN, Marton, 55218 Ingelheim (DE); METZGER, Burkhard, 55218 Ingelheim (DE); WEITZEL, Bernhard, 55218 Ingelheim (DE)
(86) Internationale Anmeldenummer: PCT/EP2003/009651
(87) Internationale Veröffentlichungsnummer: WO 2004/034009

(56) Entgegenhaltungen:
- DE-A- 10 102 820
- FR-A- 2 193 478

## Beschreibung

Die vorliegende Erfindung betrifft ein Verfahren zur sicheren und schnellen Überprüfung der Dichtigkeit von geschlossenen Behältnissen bzw. ihrer Leckrate mittels Beaufschlagung mit einem Gas. Besonders geeignet ist das erfindungsgemäße Verfahren zur Überprüfung der Dichtigkeit von Blistern für pharmazeutische Wirkstoffformulierungen.

### Stand der Technik

Folienbehältnisse dienen dazu, Produkte sicher zu verpacken. Im Kontext der vorliegenden Erfindung werden unter dem Begriff Behältnisse insbesondere Primärverpackungen für pharmazeutische Formulierungen, wie Glasbehälter, Metallbehälter, Kunststoffbehälter und ähnliches verstanden. Bevorzugt handelt es sich um Folienbehältnisse, die im wesentlichen aus Folien aufgebaut sind. Die im Kontext der vorliegenden Erfindung verwendeten Behältnisse, sind derart, dass deren Ummantelung an wenigstens einem Punkt mit einem spitzen Gegenstand durchstochen werden kann, ohne den Behälter dabei vollständig zu zerstören. Insbesondere werden unter dem Begriff "Behältnisse" pharmazeutische Blister verstanden. Ebenfalls können mittels des erfindungsgemäßen Verfahrens auch Kartuschen geprüft werden, die als Wirkstoffreservoir für pharmazeutische Flüssigkeiten in Inhalatoren verwendet werden. Solche Kartuschen werden beispielsweise in der EP 0532 873, WO 96/06011, WO 97/39831, WO 00/23037, WO 00/27543, WO 00/049988, WO 01/76849, WO 99/43571 oder der WO 98/46522 beschrieben. Auf die genannten Patentanmeldungen wird hiermit ausdrücklich inhaltlich Bezug genommen.

Im pharmazeutischen Kontext dienen diese Folienbehältnisse u.a. dazu, die pharmazeutischen Formulierungen vor Umwelteinflüssen von Außen zu schützen, die unter Umständen die pharmazeutische Qualität der Formulierung beeinflussen könne. Insbesondere wird als ein solcher Umwelteinfluss Feuchtigkeit (Wasserdampf) genannt. Eine andere Aufgabe dieser Behältnisse ist es, zu verhindern, dass flüchtige Stoffe im Laufe der Lagerung aus dem Füllgut im Inneren des Behälters heraus diffundieren und dadurch die pharmazeutische Formulierung verändern.

Sollen z.B. Tabletten, Kapseln, Pulver u.ä. vor Feuchtigkeit geschützt werden, werden sie oft in Blister eingeschweißt, die so dicht sein müssen, dass kein Wasser von außen an die Formulierung eindringen kann.

Typische Blister bestehen aus wenigstens zwei Folien, die ihrerseits aus mehreren Schichten verschiedener oder gleicher Materialien aufgebaut sein können. Dabei handelt es sich zum einen um eine Bodenschicht bzw. Bodenfolie. Zum anderen handelt es sich um eine Deckschicht oder Deckfolie.

In der Bodenschicht können eine oder mehrere Wannen ausgebildet sein, in die die pharmazeutische Formulierung, Tablette(n) oder Kapsel(n) eingelegt wird (werden).

Die Deckschicht wird auf die Bodenschicht aufgelegt und an dieser fixiert. Zumindest an den Randstellen werden dann die beiden Schichten miteinander dicht verbunden, z.B. durch Verkleben oder Verschweißen.

Die beiden Schichten werden in der Regel aus Kunststofffolien oder Metallfolien hergestellt. Andere Materialien, wie z.B. Papier, können ebenfalls verwendet werden.

Mechanisch unversehrte Blister schützen jedoch eine darin eingebettete Wirkstoffformulierung nicht zwangsläufig vor dem Eintritt von Stoffen von außen, wie z.B. Feuchtigkeit. So kann Feuchtigkeit über die obere Seite des Blisters, die Unterseite oder durch die Nahtstelle zwischen der Deck- und Bodenschicht durch Diffusion durch das Folienmaterial eintreten.

Neben derartigen Diffusionsproblemen kann auch eine Beschädigung der Blister zum Kontakt des darin eingebetteten Produkts mit Feuchtigkeit führen. Die Beschädigungen müssen dabei nicht makroskopisch sichtbarer Natur sein, sondern können mikroskopisch klein sein.

Flüssige Formulierungen können z.B. in die oben genannten Behältnisse und Kartuschen verpackt werden. Diese Verpackungsarten sollten naturgemäß so dicht sein, dass die Flüssigkeit oder Bestandteile derselben, nicht durch die Verpackung nach außen gelangen oder diffundieren kann.

Flüssige Formulierungen können für verschiedene pharmazeutische Zwecke eingesetzt werden. Ein Zweck ist z.B. die Applikation von flüssigen Inhalationsformulierungen mittels bestimmter treibgasfreier Formulierungen auf wässriger oder alkoholischer Basis. Ein solcher Inhalator wird beispielsweise in der WO 97/12687 oder der WO 91/14468 beschrieben und ist unter dem Namen Respimat® bekannt. In diesem Zusammenhang wird besonders auf die Figuren 6a und 6b der WO 97/12687 verwiesen. In einen solchen Inhalator können Kartuschen aus Kunststoffbehältern der oben beschriebenen Art eingesetzt werden. Diese Behälter können mehrschichtige Behälter sein, die über ein Coextrusionsverfahren hergestellt werden, z.B. Behälter mit einer äußeren Hülle aus Polypropylen und einer inneren Hülle aus Polyethylen oder es handelt sich um Behälter aus einer Metallfolie mit einem Flansch (WO 99/43571).

Um nun die Dichtigkeit solcher Folienbehältnisse bestimmen zu können, sei es gegenüber von außen eindringenden Flüssigkeiten oder Gasen, z.B. Feuchtigkeit in Form von Wasser oder Wasserdampf, oder von innen austretenden Flüssigkeiten oder Gasen, sind aus dem Stand der Technik verschiedene Verfahren bekannt. Dies gilt insbesondere für Blister.

Die FR 2193478 A betrifft ein allgemeines Verfahren zur Dichtigkeitsprüfung an Behältern, das vor allem auf die Überprüfung der Dichtigkeit von Verschlüssen und Wandmaterialien gerichtet ist. Hierbei wird das zu prüfende Behältnis evakuiert, verschlossen und anschließend in einer Kammer Prüfgas ausgesetzt. Nach einer Einwirkzeit von 10 Stunden wird der Behälter entnommen und mit Luft geflutet. Anschließend wird eine Probe dieser Luft genommen und an einem entsprechenden Sensor auf Vorhandensein des Prüfgases getestet.

Für die Prüfung von Folienbehältnissen auf Dichtigkeit sind aus dem Stand der Technik verschiedene andere Verfahren bekannt.

So kann z.B. ein mit Trockenmittel gefüllter Behälter (z.B. Blister) Stressbedingungen (z.B. 40 °C, 75 % Raumfeuchte) ausgesetzt werden und anschließend wird über eine Gewichtszunahme des Behälters über die Zeit auf die Dichtigkeit geschlossen.

Derartige Verfahren benötigen einige Tage bzw. sogar Wochen um niedrige Leckraten (Bereich 1x10⁻⁶ bis 1 x 10⁻⁷ mbar l/s) nachzuweisen.

In einem anderen Verfahren wird ein Behälter (z.B. Blister) z.B. unter Helium-Atmosphäre versiegelt. Helium wird hierdurch im Behälter eingeschlossen. Der Behälter wird daraufhin auf austretendes Helium untersucht.

Dies kann z.B. durch Untertauchen in ein Fluid unter Beobachtung der austretenden Gasblasen aus dem Behälter geschehen.

Alternativ kann der Behälter, bevorzugt ein Blister, z.B. in eine separate Messkammer gelegt werden, wobei anschließend aus dem Behälter austretendes Gas mit geeigneten Messsystemen in der Messkammer nachgewiesen wird.

So zeigt die DE 10102820 A ein Herstellungsverfahren von Blisterverpackungen, in denen sich das Produkt in auf einer Trägerfolie geformten Näpfen befindet, die mittels einer Deckfolie überdeckt werden. Auf der zugehörigen Blisterverpackungsmachine wird die Dichtigkeit der Verbindung zwischen Deckfolie und einigen stichprobenhaft ausgewählten Näpfen überprüft. Bei den zu überprüfende Näpfe wird bevorzugt für die Zuverlässigkeit der Messung die Produktzufuhr unterlassen und vor Aufbringen der Deckfolie ein Prüfgas wie z.B. Helium oder CO₂ eingefüllt. Ein so erzeugter Prüfblisterstreifen wird in einer Prüfvorrichtung auf den Austritt von Prüfgas aus den Näpfen untersucht. Hierbei wird der Prüfblisterstreifen in eine Kammer gelegt, in der die Umgebungsluft abgesaugt wird, worauf das aus einem undichten Napf austretende Prüfgas von entsprechenden Sensoren erkannt wird.

Bei diesem Verfahren ist es notwendig, dass im Behälter eine gleichbleibende hohe Helium-Konzentration eingestellt wird, um reproduzierbare Ergebnisse zu erhalten, was in einem Produktionsprozess nicht mehr einfach möglich ist. Außerdem kann nur ein Behälter getestet werden, in dem vorher Helium eingeschlossen wurde.

In einem weiteren Verfahren wird der unter normalen Bedingungen gefertigte Behälter, insbesondere Blister, in einen druckstabilen Behälter ("Bombe") eingeschlossen, der anschließend mit Gas aufgefüllt wird. Als Gas wird üblicherweise Kohlendioxid, Helium oder Krypton verwendet. Nach einer bestimmten Zeit wird der zu untersuchende Behälter aus der "Bombe" entfernt. Dieser Behälter wird daraufhin auf austretendes Gas untersucht. Dies kann analog zu oben durch Untertauchen in ein heißes Fluid unter Beobachtung der austretenden Gasblasen aus dem Blister geschehen. Alternativ kann der Blister z.B. eine separate Messkammer gelegt werden, wobei anschließend aus dem Blister austretendes Gas mit geeigneten Messsystemen in der Messkammer nachgewiesen wird.

Die Anwendbarkeit der beiden zuletzt genannten Verfahren wird durch die Nachweisgrenze des Gases in der Messkammer begrenzt. Im Fall eines an und für sich dichten Behälters kann nämlich in den beiden Verfahren nur wenig Gas (ppm-Bereich) in den Behälter eindringen und dementsprechend auch nur sehr wenig Gas aus dem Behälter wieder in die Messkammer ausgasen.

Im Fall von Blistern stößt dieses Verfahren jedoch an seine Grenzen, wenn in den Blistern sehr wasserempfindliche Wirkstoffe eingeschlossen werden sollen. Dies bedeutet nämlich, dass an die Behälter entsprechend hohe Anforderungen an deren Dichtigkeit gestellt werden. In diesem Fall sind diese Dichtigkeitsbestimmungsmethoden nicht geeignet, wenn die Einwirkzeit des Gases auf den Blister in der "Bombe" oder in der Messkammer nicht deutlich verlängert werden soll, z.B. auf mehrere Tage, der Gasdruck in der "Bombe" erhöht werden soll oder außerordentlich empfindliche Messgeräte angeschafft werden sollen.

Ähnliches gilt für andere Behältnisse.

Werden solche Maßnahmen eingeleitet, muss mit sehr langen Messdauem gerechnet werden und es kann durch die Erhöhung des Drucks zu einer Beschädigung des Blister kommen.

Für schnelle Dichtigkeitstests, z. B. als In-Prozess-Kontrolle während der Blister- oder Behälterherstellung, sind diese Verfahren nicht geeignet.

In der Literatur finden sich weitere Beispiele, z.B. Instiute of Electrical and Electrinics Engineers, Catalog No. 85CH2113-9, 1985, Seite 65; PDA, Journal of Pharmaceutical Science & Technolgy, Vol. 51, No. 5, 1997, Seite 187ff, 203ff.

### Beschreibung der Erfindung

Es ist daher eine Aufgabe der Erfindung ein Verfahren zur Überprüfung der Dichtigkeit von Folienbehältnissen für pharmazeutische Formulierungen zu schaffen, insbesondere für Blister, mehrschichtige Kunststoffkartuschen oder Metallfolienkartuschen, die die Nachteile der aus dem Stand der Technik bekannten Überprüfungsverfahren nicht aufweisen.

Eine weitere Aufgabe besteht darin, ein Dichtigkeitsmessverfahren zu schaffen dass produktionsbegleitend angewandt werden kann, d.h. ohne den Produktionsprozess länger zu unterbrechen.

Eine weitere Aufgabe besteht darin, ein schnelles Dichtigkeitsmessverfahren zu schaffen.

Schließlich besteht eine Aufgabe darin, ein Dichtigkeitsmessverfahren zu schaffen, welches die Messung von sehr kleinen Leckagen erlaubt und damit sehr genau ist.

### Beschreibung der Erfindung im Detail

Das vorliegende erfindungsgemäße Verfahren zur Überprüfung der Dichtigkeit von geschlossenen Behältnissen ist auf beliebige Arten von Behältnissen oder auch anderen ähnlichen Gefäßen und Aufbewahrungsvorrichtungen anwendbar. Die im Rahmen der vorliegenden Erfindung bevorzugten Behältnisse sind Folienbehältnisse, insbesondere pharmazeutische Blister, wie sie an einer anderen Stelle näher beschrieben werden.

Bei dem erfindungsgemäßen Verfahren wird zunächst in einem ersten Schritt ein geschlossenes Behältnis mit einem, bezogen auf das Volumen definierten Innenraum von außen mit einem Gas beaufschlagt, so dass das Gas durch den Mantel des Behältnisses oder durch Nahtstellen in das Innere des Behältnisses eindringen kann. Unter dem Begriff "definierter Innenraum" wird ein Innenraum verstanden, dessen Volumen von 0 verschieden ist. Die Beaufschlagung mit Gas kann entweder durch Anwendung von Überdruck, unter Anwendung von Permeationseffekten mit und ohne Anwendung von Überdruck oder Diffusion stattfinden, wobei bei den zuletzt genannten Verfahren die Anwendung von Drücken nicht zwingend erforderlich ist.

Wird im Rahmen der vorliegenden Erfindung von Überdruck gesprochen, bezieht sich das auf eine Druckdifferenz zwischen dem Druck im Inneren des Behälters, in dem die Wirkstoffformulierung gelagert wird und dem Druck der Außenumgebung des Behälters.

Die Anwendung von Druck hat den Vorteil, dass das Verfahren beschleunigt werden kann. Die Beaufschlagung mit Gas durch Diffusion oder der Ausnutzung von Permeationseffekten ohne Anwendung von Überdruck ist für druckempfindliche Behältnisse von Vorteil. Im Rahmen der vorliegenden Erfindung, auch in Bezug auf die Messung der Dichtigkeit von pharmazeutischen Blistern, wird bevorzugt unter Anwendung von Drücken gearbeitet.

Wie schnell Gas in das Behältnis eindringen kann oder ob es überhaupt eindringt, hängt von verschiedenen Parametern ab. Zu diesen Parametern zählen die bereits erwähnten Faktoren Druck, Permeations- und/oder Diffusionsrate des Behältermaterials in Bezug auf das verwendete Gas, das Gas selbst, die Temperatur bei der die Beaufschlagung vorgenommen wird und die Beaufschlagungszeit.

Im Fall eines Blisters befindet sich also nach der Beaufschlagung in dem Innenraum des Blisters (z.B. in der Wanne) nicht nur das darin zuvor eingeschlossene Produkt und das davor befindliche Gas, sondern auch das beaufschlagte Gas. Dieses eingedrungene Gas wird erfindungsgemäß in weiteren Schritten entnommen und analysiert.

Bei der Beaufschlagung mit Druck kann in einer sogenannten "Bombe" oder einem anderen dafür geeigneten Raum gearbeitet werden. Besonders im Fall von Blistern wird das Gas bei einem leichten Überdruck beaufschlagt, dass heißt bei absoluten Drücken von größer 1 bar. Die Obergrenze für den Beaufschlagungsdruck ist in Abhängigkeit des Behältermaterials bzw. Blistermaterials, unterschiedlich. Limitierend ist einzig, dass der Behälter bei dem angewandten Druck nicht verletzt oder eingedrückt werden soll. Bei Blistern wird das Verfahren bevorzugt bei einer Druckdifferenz zwischen dem Inneren des Blisters und der Außenumgebung von 0,1 bis 10 bar, bevorzugt von 0,5 bis 5 bar angewandt, besonders bevorzugt sind Druckdifferenzen zwischen 1 und 2 bar.

Die Zeit der Beaufschlagung hängt vom gewählten Druck ab. Der Druck sollte aber aus Zweckmäßigkeit so gewählt werden, dass die Beaufschlagungszeit nicht länger als 5 Stunden, bevorzugt nicht länger als 3 Stunden, besonders bevorzugt nicht länger als 1 Stunde und am stärksten bevorzugt zwischen 1 und 45 Minuten beträgt.

Als Gas für die Beaufschlagung kann jedes beliebige, nach Möglichkeit inerte Gas gewählt werden, sofern es dafür Analysemöglichkeiten gibt. Als Gas kann beispielsweise eingesetzt werden: Wasserstoff, Wasserdampf, Edelgase wie Helium, Neon, Argon, Krypton, Kohlendioxid, Stickstoff, Kohlenmonoxid, Kohlenstoff-Schwefelgase, Schwefeldioxid, Schwefelwasserstoff, Kohlenwasserstoffe wie Methan oder Ethan, Fluorkohlenwasserstoffe wie TG 134a oder TG 227, Fluorchlorkohlenwasserstoffe oder andere. Das eingesetzte Gas soll so beschaffen sein, dass der ins Innere des Behältnisses eingedrungene Teil anschließend quantitativ bestimmt werden kann. Aus pragmatischen Gründen sollte das beaufschlagte Gas ein anderes Gas sein, als dasjenige, welches im Blister ohnehin eingeschlossen ist oder sich in der Menge derart unterscheidet, so dass es qualitativ und /oder quantitativ gegenüber dem bereits vorher anwesenden Gas im Inneren des Behälters unterscheidbar analysiert werden kann. Diese Auswahl erleichtert die Analyse.

Ist z.B. in dem Behälter zusammen mit dem zu verpackenden Produkt Luft eingeschlossen, sollte aus analysetechnischen Gründen nicht Stickstoff als Beaufschlagungsgas gewählt werden, weil in der Luft bereits sehr viel Stickstoff enthalten ist. Kohlendioxid als Beaufschlagungsgas dagegen ist auch in diesem Fall möglich.

Wird das Produkt in dem Behälter unter einem Inertgas, z.B. Kohlendioxid, verpackt, kann als Beaufschlagungsgas nicht ebenfalls Kohlendioxid gewählt werden.

Bevorzugt werden pharmazeutische Produkte jedoch in Gegenwart von Luft und unter Normalbedingungen verpackt. In diesem Fall sind als Beaufschlagungsgas die Edelgase, Kohlendioxid und Fluorkohlenwasserstoffe bevorzugt. Besonders bevorzugt ist Helium.

Die genannten, verfahrenstechnischen Angaben gelten insbesondere für Blister, können jedoch auch auf andere Behälter übertragen werden.

Für das erfindungsgemäße Verfahren kann jede Temperatur zugelassen werden, bei der das Behältnismaterial nicht beschädigt wird. Da das Verfahren jedoch auch auf einen laufenden Verpackungsprozess für pharmazeutische Formulierungen angewendet werden soll, ist es zweckmäßig die Temperatur so zu wählen, dass die pharmazeutische Qualität der Formulierung nicht leidet. Bevorzugt wird daher bei einer Temperatur von 0°C bis 50°C gearbeitet, besonders bevorzugt zwischen 10°C und 30°C am stärksten bevorzugt ist Raumtemperatur.

Im zweiten Schritt des Verfahrens wird der Behälter nach Beendigung der Beaufschlagung vorsichtig geöffnet und eine Entnahmevorrichtung für Gas wird in den Behälter eingeführt. Mit dieser Entnahmevorrichtung kann eine geringe Menge Gas aus dem Bereich des Inneren des Behälters entnommen werden, in dem sich die Wirkstoffformulierung befindet.

Das Öffnen des Behälters kann auf verschiedene Arten durchgeführt werden. Im Fall von Blistern kann dieser z.B. mit einer entsprechenden Vorrichtung angestochen werden. Im Fall anderer Behälter können diese angestochen werden oder es wird z.B. eine Kappe geöffnet, ein Stopfen entfernt usw. Wird der Blister angestochen, sollte der Anstich tief genug in den Blister eindringen, das ein Verbindung zwischen der Außenumgebung und dem bereich des Behälters hergestellt wird, in dem sich die Wirkstoffformulierung befindet. Ebenfalls möglich ist ein Anstechen durch ein dicht aufgebrachtes Septum o.ä.

Die Entnahmevorrichtung und die Vorrichtung zum Anstechen des Behälters kann eine einzige Vorrichtung sein, z.B. eine Kanüle mit einem daran angeschlossenen Schlauch oder es können zwei Vorrichtungen sein, z.B. eine Nadel zum Anstechen und ein Schlauch zum Entnehmen des Gases. Bevorzugt wird eine Kanüle mit Schlauch verwendet.

In einem dritten Schritt wird das entnommene Gas qualitativ und bevorzugt auch quantitativ bestimmt.

Dabei kann das Gas automatisch einem Analysator, z.B. Helium-Leck-Detektor UL 200 der Firma Leybold Vacuum
zugeführt werden. In solchen Fällen kann die Entnahme z.B. mit einem kontinuierlichen Gasstrom von etwa 0,001 Kubikzentimeter/Sekunde vorgenommen und annähernd zeitgleich analysiert werden. Bevorzugt findet die Entnahme und Analyse innerhalb von weniger als 5 Minuten statt, bevorzugt innerhalb von weniger als 1 Minute und am stärksten bevorzugt innerhalb von 30 Sekunden.

Das erfindungsgemäße Verfahren ist in der Lage in kurzer Zeit ohne großen Aufwand bereits geringe Leckraten von Behältern im ppm-Bereich zu bestimmen. Bei Blistern z.B. insbesondere Leckraten in einer Größenordnung von weniger als 10⁻⁴ mbar * l/s, bevorzugt weniger als 10⁻⁶ mbar * l/s stärker bevorzugt weniger als 10⁻⁸ mbar * l/s. Die Grenzen sind aber nicht limitierend, so können auch Leckagen von weniger als 10⁻¹⁰ mbar * l/s bestimmt werden.

Im Rahmen der vorliegenden Erfindung ist es ausreichend, wenn die Leckrate von pharmazeutischen Behältern maximal zwischen zu 10⁻⁵ mbar * l/ und 10⁻⁹ mbar * l/s, bevorzugt 10⁻⁶ mbar * l/ und 10⁻⁸ mbar * l/s liegt. Derartige Behälter, besonders Blister, sollen im Kontext dieser Erfindung als dicht betrachtet werden.

Im Rahmen des vorliegenden, erfindungsgemäßen Verfahrens zur Bestimmung der Dichtigkeit von Behältern, werden bevorzugt Blister getestet. Dabei kann jede Art von Blister eingesetzt werden, z.B. die eingangs beschriebenen Blister. Bevorzugt wird das Verfahren für pharmazeutische Blister aus zwei und mehr Schicht- oder Folienabfolgen angewandt.

Wie bereist erwähnt können als Materialien für die Schichten des Blisters z.B. Kunststoffe, Metalle, Papier u.a. verwendet werden.

Typische Metallfolien umfassen Aluminiumfolien und Aluminiumverbundfolien, die aus Aluminium und z.B. einem Kunststoff bestehen..

Als Material für die Kunststofffolien kann PVC (Polyvinylchlorid), COC (Cycloolefin-Copolymer, z.B. Topas®), Polychlorotrifluorethylen (z.B. ACLAR®), Polyethylen (z.B. als high density Polyethylen oder low density Polyethylen), Polypropylen, Polyethylenterephthalalt, Polycarbonate, Polyester, Polyacrylate, Polyamide oder andere Kunststoffe verwendet werden.

Eine Folie kann also aus mehreren Schichten des gleichen Materials bestehen oder aus zwei oder mehreren Schichten verschiedener Materialien.

Ein Blister kann aus mehreren Schichten des gleichen Materials bestehen oder aus zwei oder mehreren Schichten verschiedener Materialien.

So kann z.B. ein Blister aus einer Deckfolie aus Aluminium bestehen, die die (Tiefzieh-) Folie zur Aufnahme des pharmazeutischen Produktes aus Kunststoff verschließt. Diese (Tiefzieh-) Folie wird im vorliegenden Kontext auch Wannenfolie genannt, wenn in der Folie Wannen oder Näpfe zur Aufnahme der pharmazeutischen Formulierung ausgebildet sind. Unter der (Tiefzieh-) Folie zur Aufnahme des pharmazeutischen Produktes kann als weitere Folie erneut eine Aluminiumfolie ausgebildet sein, um den Eintritt von Wasser durch die Folie in die (Tiefzieh-) Folie zur Aufnahme des pharmazeutischen Produktes zu verhindern und dadurch den Kontakt der pharmazeutischen Formulierung mit Wasser zu minimieren. Die beiden Aluminiumfolien können ihrerseits durch weitere Kunststoff- und/oder Papierschichten bedeckt sein, so dass eine weitere Diffusionsbarriere geschaffen wird und/oder dem Blister eine erhöhte mechanische Stabilität verliehen wird.

Die einzelnen Schichten sind am Rand des Blisters miteinander verschweißt oder verklebt. Als Verbindungsmaterial kann hierfür z.B. ein Heißsiegellack verwendet werden, z.B. auf Basis eines Polyacrylats und/oder Polyethylens (z.B. high density und/oder low density Polyethylen).

Ebenfalls bevorzugt werden durch das erfindungsgemäße Verfahren Behältnisse für flüssige pharmazeutische Formulierungen getestet, die als Kartuschen in treibmittel-freien Inhalatoren eingesetzt werden können. Bei den flüssigen Formulierungen handelt es sich bevorzugt um Lösungen mit Wasser als hauptsächlichem Bestandteil des Lösungsmittels. Bevorzugt wird das Verfahren für Formulierungen eingesetzt, deren Lösungsmittel ausschließlich Wasser ist oder ein Gemisch aus Wasser und einem pharmazeutisch verträglichen Alkohol wie Ethanol. Das Verfahren ist insbesondere dann von Vorteil, wenn einer der Lösungsmittelbestandteile leicht flüchtig ist. Neben Lösungsformulierungen, können auch Behälter mit Suspensionsformulierungen überprüft werden.

Das erfindungsgemäße Verfahren ist nicht dahingehend limitiert, dass in dem Behältnis neben der Wirkstoffformulierung auch Luft im inneren eingeschlossen ist. Das Verfahren kann auch angewendet werden, wenn die innere Kammer des Behältnisses vollständig mit der Wirkstoffformulierung gefüllt ist. Ist der Behälter zum Beispiel vollständig mit Flüssigkeit gefüllt, wird durch die Entnahmevorrichtung keine Gasprobe gezogen, sondern eine Flüssigkeitsprobe und anschließend wird überprüft, wie viel Gas sich in der Flüssigkeit gelöst hat. In diesem Fall ist es sinnvoll als Beaufschlagungsgas ein Gas zu nehmen, welches vor der Beaufschlagung nicht in der Flüssigkeit vorhanden war. Alternativ dazu kann die Flüssigkeit vor dem Abfüllen in den Behälter oder dessen Verschließen vollständig entgast werden.

Als Beispiel für einen derartigen Behälter sei ein zweischichtiger, flaschenähnlicher Behälter genannt, der im Coextrusionsverfahren hergestellt ist. Dabei entsteht ein äußerer, steifer Behälter, z.B. aus Polypropylen, und einem darin befindlichen, flexiblen und kollabierbaren inneren Behälter, z.B. aus Polyethylen. Die beiden Behälter sind nur an wenigen Stellen miteinander mechanisch verbunden, z.B. in der Halsregion oder dem Bodenbereich. Dabei enthält der äußere Behälter wenigstens eine Ventilöffnung, die es ermöglicht, dass Luft zwischen dem äußeren und dem inneren Behälter einströmen kann. Der innere Behälter ist ähnlich einer Plastiktüte und kann sich zusammen ziehen, wenn aus dem geschlossenen System unter Unterdruck eine Flüssigkeit aus dem inneren Behälter entnommen wird.

Der Behälter wird anschließend mit einer Kappe verschlossen. Details zu einem solchen Behälter mit Verschlusskappe sind beispielsweise in der WO 96/06011 beschreiben und dort insbesondere in den Figuren 1 und 4 auf die hiermit ausdrücklich inhaltlich Bezug genommen wird.

Ein weiteres Beispiel für eine Kartusche für treib-mittel freie Vernebler findet sich in der WO 99/43571 auf die hiermit inhaltlich Bezug genommen wird. In diesem Fall besteht die Kartusche im Wesentlichen aus einem Sack aus einer Kunststoff und/oder Metallfolie z.B. einer kunststoffbeschichteten Aluminiumfolie. Der Sack ist auf allen bis auf eine Seiten z.B. durch eine Schweißnaht verschlossen. Die verbleibende Seite ist durch einen Flansch verschlossen. Dieser ist bevorzugt aus einem Kunststoff. Alternativ können alle Seiten verschlossen sein und der Flansch ist auf der Oberfläche des Sacks angebracht. Der Flansch weist eine Einrichtung zum Durchstechen einer Kanüle auf, so dass die Kanüle in das innere des Behälters eindringen kann.

Zum Schutz des Sacks kann dieser in eine Metall- oder Kunststoffhülse eingebracht werden.

Im Rahmen des erfindungsgemäßen Verfahrens kann der mit Arzneimittel gefüllte Sack z.B. durch den Sackmantel angestochen werden, um eine Probe aus dem Inneren zu entnehmen. In diesem Fall ist es vorteilhaft, wenn der Sack noch nicht von der Schutzhülse umgeben ist. Alternativ kann der Sack auch durch Durchstechen einer Kanüle durch den Flansch geöffnet werden, um dann die Probe zu entnehmen. In diesem, bevorzugten Fall wird der Behälter genauso geöffnet, wie es bei Gebrauch im Inhalator vorgesehen ist.

Diese Variante der Entnahme ist auch für das Testen des zuvor beschriebenen Behälters bevorzugt.

Als Arzneimittelformulierungen für die Behälter, die über das erfindungsgemäße Verfahren getestet werden können, kommen prinzipiell jede Art von Formulierungen in Frage. Bevorzugt werden Behälter mit Arzneimitteln für die inhalative Applikation getestet.

Als Arzneimittel sind insbesondere Wirkstoffe aus der Klasse der Anticholinerigka, Antihistaminika, Antiallergika, Leukotrien-Antagonisten und/oder Steroide bevorzugt. Kombinationsformulierungen können ebenfalls eingesetzt werden.

Zu diesen Wirkstoffen zählen:
Als Betamimetika:
   Bambuterol, Bitolterol, Carbuterol, Clenbuterol, Fenoterol, Formoterol, Hexoprenalin, Ibuterol, Pirbuterol, Procaterol, Reproterol, Salbutamol, Salmeterol, Sulfonterol, Terbutalin, Tulobuterol,
      1-(2-Fluor-4-hydroxyphenyl)-2-[4-(1-benzimidazolyl)-2-methyl-2-butylamino]ethanol, erythro-5'-Hydroxy-8'-(1-hydroxy-2-isopropylaminobutyl)-2H-1,4-benzoxazin-3-(4H)-on, 1-(4-Amino-3-chlor-5-trifluormethylphenyl)-2-tert.-butyl-amino)ethanol, 1-(4-Ethoxycarbonylamino-3-cyan-5-fluorphenyl)-2-(tert.-butylamino)ethanol.
Als Anticholinergika:
   Benzilsäure-N-β-fluorethylnortropinestermethobromid, Ipratropiumbromid, Oxitropiumbromid, Tiotropiumbromid, Tiotropiumbromid-Monohydrat, Trospiumchlorid.
Als Antiallergika:
   Dinatriumcromoglicat, Epinastin, Nedocromil.
Als Steroide:
   Alclometason, Alclometason-dipropionat, Alisactid, Amcinonid, Aminoglutethimid, Aristocort-diacetat, Beclometason, Douglas, Beclometason, Beclometason-17, 21-Dipropionat, Betamethason valerat, Betamethasonadamantoat, Budesonid, Butixocort, Canesten-HC, Ciclometason, Clobetasol, Clobetason, Cloprednol, Cloprednol, Cortivazol, Deflazacort , Fluocortin butyl, Demetex, Deprodon, Deprodon Propionat, Dexamethason, Dexamethason-21-isonicotinat, Dexamethasonisonicotinat, Diflorason, Difluprednat, Endrisone, Fluazacort, Fluclorolon acetonid, Flunisolid , Fluocinolon acetonid, Fluocinonid, Fluocortin, Fluocortoloncapronat, Fluodexan, Fluorometholon, Fluticason, Fluticasonpropionat, Formebolon, Formocortal, Halcinonid, Halometason, Halopredon-acetat, Hydrocortison, Hydrocortison-17-Butyrat, Hydrocortison-aceponat, Hydrocortisonbutyratpropionat, Icomethason enbutatCiclometason, Lotrison, Mazipredon, Medryson, Meprednison, Methylprednisolon-Aceponat, Mometason furoat, Mometason, Montelukast, Mycophenolate mofetil, Pranlukast, Paramethason-acetat, Prednicarbat, Promedrol, Seratrodast, Tipredan, Tixocortol-pivalat, Triamcinolon, Triamcinolon-Hexacetonid, Trilostan, Trimacinolon Benetonid, Ulobetasol-propionat, Zileuton, 9-alpha-chloro-6-alpha-fluoro-11-beta-17-alpha--dihydroxy-16-alpha--methyl-3-oxo-1,4-androstadien-17-beta-carboxysäure-methylester-17-propionat.

Die genannten Wirkstoffe können auch in Form von anderen pharmakologisch verträglichen Salzen, Additionsprodukten, Solvaten etc. eingesetzt werden.

Das erfindungsgemäße Verfahren wird bevorzugt für Behältnisse mit den genannten Wirkstoffen oder Kombinationen verwendet, ist jedoch nicht auf die genanten Wirkstoffe beschränkt.

Die Vorteile des beanspruchten Verfahrens sind unter anderem:
- Während des Produktionsverfahrens kann ein beliebiger Folienbehälter aus der laufenden Produktion getestet werden,
- das Verfahren bedarf keiner komplizierten Handhabung,
- die Bearbeitungszeit ist vergleichsweise kurz, wobei der geschwindigkeitsbestimmende Schritt die Zeit zur Beaufschlagung des Behälters mit Gas ist
- der Produktionsprozess muss nicht unterbrochen werden
- bei bekannten Blistergeometrien kann sofort automatisiert auf die Leckrate geschlossen werden,
- die Nachweisgrenze für Leckagen ist sehr niedrig.

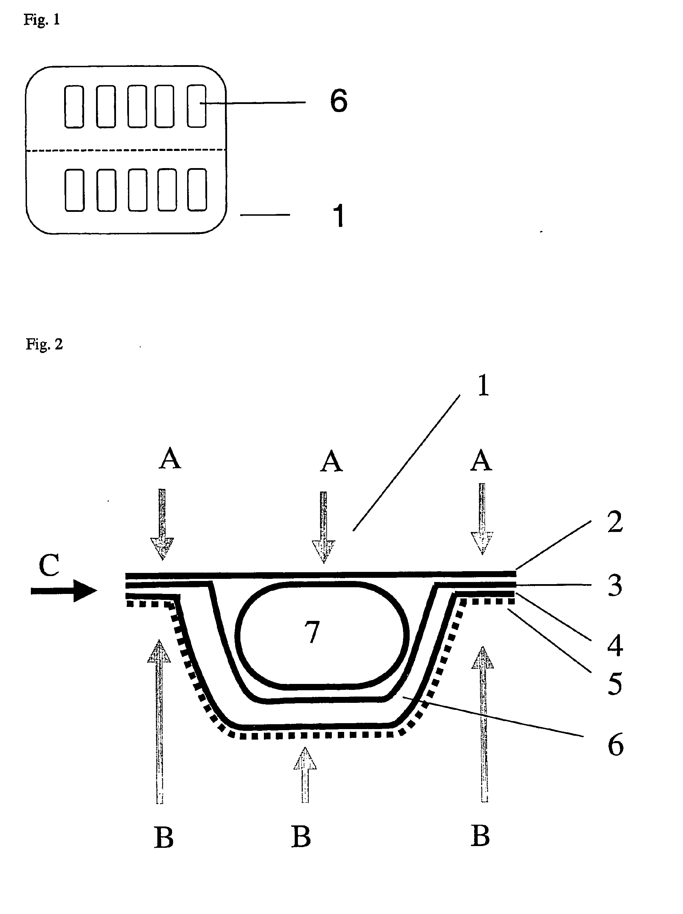

Im folgenden werden typische Behältnisse detailliert beschrieben, auf die das erfindungsgemäße Verfahren angewendet werden kann. Am stärksten bevorzugt sind Blister nach den Figuren 1 und 2.

In Figur 1. ist ein im Rahmen der vorliegenden Erfindung typischer Blister (1) mit mehreren Näpfen/Kavitäten (6) in Draufsicht dargestellt.

Fig. 2 zeigt einen Blister im Querschnitt, wobei nur ein Napf (6) dargestellt ist.

Der Blister besteht aus einer Deckschicht (2), dann z.B. einer Tiefziehfolie mit mehreren nicht miteinander verbunden Näpfen (3) zur Aufnahme des pharmazeutischen Produktes, einer unteren Wannenschicht (4) und der Schutzschicht (5) um die Wannenschicht (4).

Die Pfeile A zeigen auf die Deckschicht (2) und sollen den Diffusionsweg von Feuchtigkeit durch die Deckschicht darstellen.

Die Pfeile B zeigen auf die bodenseitigen Schicht (3, 4, 5) und sollen den Diffusionsweg von Feuchtigkeit durch die Bodenschicht darstellen.

Der Pfeil C zeigt auf die Verbindungsstelle zwischen der Deck- und der Bodenschicht und den Weg, den Feuchtigkeit durch diesen Bereich des Blisters nehmen kann.

Im Rahmen der vorliegenden Erfindung sind Blister mit folgender Schichtenabfolge bevorzugt:
Eine Deckfolie bestehend aus einer ersten Deckschicht (d.h. äußerste Deckschicht) aus Papier (20 bis 100 g/m²) oder Lack (0,5 bis 3 g/m²), eine darunter befindliche zweite Deckschicht (2) aus Polyethylenterephthalat, bevorzugt in einer Dicke von 5 bis 20 Mikrometer, stärker bevorzugt 10 bis 15 Mikrometer, und schließlich eine Schicht aus Aluminiumfolie in einer bevorzugten Stärke von 10 bis 60 Mikrometer, bevorzugt 10 bis 50 Mikrometer und ganz bevorzugt 15 bis 40 Mikrometer.

Darunter ist die Folie zur Aufnahme des pharmazeutischen Produktes (3) angeordnet, die z.B. aus einer dreischichtigen Folie (4) in einer bevorzugten Dicke von 30 bis 500 Mikrometer, besonders bevorzugt 60 bis 300 Mikrometer ausgebildet ist. Diese Folie besteht zunächst aus einer PVC-Schicht auf der produktberührenden Seite, deren Dicke bevorzugt 10 bis 200 Mikrometer, besonders bevorzugt 35 bis 70 Mikrometer beträgt dann aus einer Aluminiumschicht, deren Dicke bevorzugt 30 bis 60 Mikrometer, besonders bevorzugt 35 bis 50 Mikrometer beträgt. Diese Aluminiumschicht ist wiederum bedeckt von einer Schicht aus Polyamid mit einer bevorzugten Stärke von 10 bis 40 Mikrometer, besonders bevorzugt 20 bis 30 Mikrometer.

Dabei können einzelne Schichten, z.B. die Papierschicht weggelassen werden. Evtl. notwendige Heißsiegellacke oder Haftvermittler werden der Einfachheit halber hier nicht berücksichtigt.

Der am stärksten bevorzugte Blister besteht aus drei Folien. Zunächst einer Deckfolie aus einer 38 Mikrometer dicken Deckschicht aus Aluminium, dann aus einer 250 Mikrometer starken Wannenfolie aus PVC zur Aufnahme des pharmazeutischen Produktes, und einer darunter liegenden Folie bestehend aus einer Schicht Aluminium in einer Stärke von 45 Mikrometern und einer bodenseitig abschließenden Schicht aus Polyamid in einer Stärke von 25 Mikrometer.

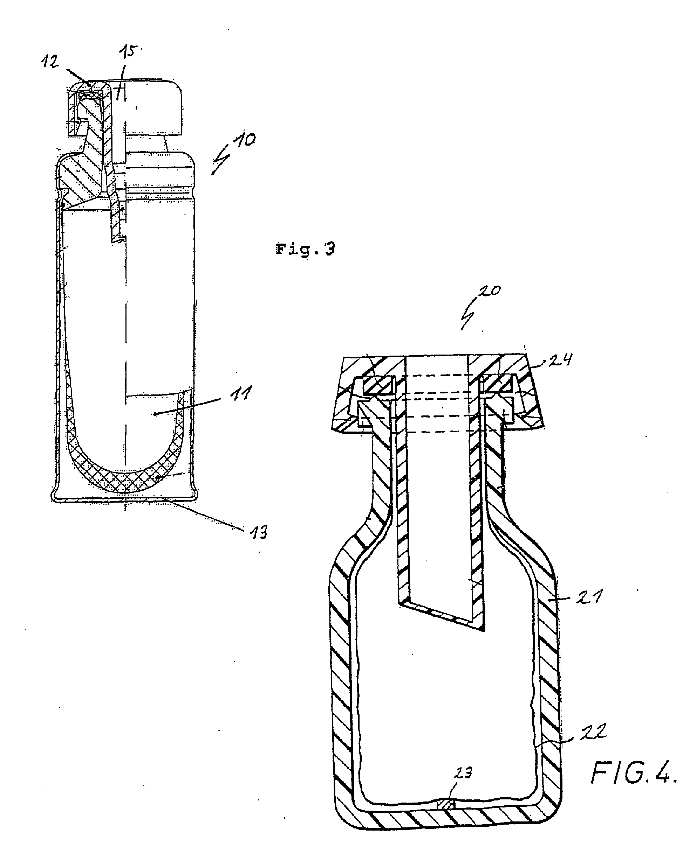

Fig. 3 zeigt eine Inhalatorkartusche (10) bestehend aus einem Sack (11) aus einer Metall- und/oder Kunststofffolie und einem Flansch (12). Der Sack kann in diesem Fall von einer Hülse (13) aus Metall oder Kunststoff geschützt werden. Der Flansch ist fest verschlossen. Bevorzugt weist er einen geschlossenen Führungskanal (15) für eine Kanüle und eine Presspassung oder Dichtung auf, die eine eindringende und den Kanal öffnende Kanüle abdichtet. Die Kanüle kann die Kanüle des bereits mehrfach genannten Inhalators Respimat® sein, mit der eine kleine Menge einer Flüssigkeit aus dem Behälter entnommen werden kann. Dieser Behälter wird auch in der WO 99/43571 ausführlich beschrieben. Der Sack kann in eine Metallhülse eingebracht werden, die über den Flansch mit dem Sack fest verbunden wird (Figuren 12 der WO 99/43571).

In Figur 4 ist eine Kartusche für den eingangs erwähnten Inhalator Respimat® (WO 91/14468 und WO 97/12687, insbesondere die Figur 6a und 6b, auf die hiermit vollständig Bezug genommen wird) dargestellt.

Die Figur zeigt in einem axialen Schnitt einen für das erfindungsgemäße Verfahren geeigneten Behälter (20).

In einer bevorzugten Ausführungsform besteht der Behälter (20) aus einem formstabilen Außenbehälter (21) und einem leicht verformbaren Innenbeutel (22).

Der Behälter ist mit einer Kappe (24) verschlossen.

Solche Behälter sind beispielsweise in der Europäischen Patentschrift 532 873 beschrieben, auf die hiermit inhaltlich Bezug genommen wird. Die Vorrichtung (23) dient zur Befestigung des verformbaren Innenbeutels (22) an der dem Beutel (22) zugewandten Innenwand des äußeren starren Behälters (21). Dieser Behälter wird auch in der WO 96/06011 ausführlich beschrieben.

Die Erfindung ist jedoch nicht auf die genannten Blister oder Kartuschen beschränkt, sondern das Verfahren kann auf beliebige Behälter angewendet werden.

## Patentansprüche

1. Verfahren zur Überprüfung der Dichtigkeit von geschlossenen Behältern,
wobei der geschlossene Behälter zuerst von außen, mit einem ersten Gas beaufschlagt wird, welches sich soweit von einem zweiten, in dem Behälter eingeschlossenen Gas unterscheidet, dass die Zunahme der Menge des ersten Gases im Inneren des Behälters analysiert werden kann und
anschließend der Behälter zur Entnahme eines Teils des Gases aus dem Inneren des Behälters zum Zweck der qualitativen und/oder quantitativen Analyse geöffnet wird **dadurch gekennzeichnet, dass**
- der Behälter ein Folienbehälter ist und eine Kammer aufweist, die in ihrem Inneren eine pharmazeutische Wirkstoffformulierung beinhaltet, und
- während der Beaufschlagung mit dem ersten Gas Wirkstoffformulierung und das zweite Gas in der Kammer des Folienbehälters eingeschlossenen sind und
- die Beaufschlagung bei absoluten Drücken von größer 1 bar durchgeführt wird.

2. Verfahren nach Anspruch 1, **dadurch gekennzeichnet, dass** der Folienbehälter aus wenigstens einer Deckfolie und einer Bodenfolie besteht, die wiederum aus einer oder mehreren Schichten bestehen können, wobei die Deckfolie und die Bodenfolie entlang ihres Umfangs miteinander fest verbunden sind.

3. Verfahren nach einem der vorangegangenen Ansprüche, **dadurch gekennzeichnet, dass** der Folienbehälter ein Blister (1) ist.

4. Verfahren nach einem der vorangegangenen Ansprüche 2 bis 3, **dadurch gekennzeichnet, dass** das Folienmaterial für jede der Folien unabhängig voneinander ausgewählt ist aus der Gruppe Metallfolien, Kunststofffolien oder Verbundfolien oder es handelt sich um eine Papierschicht.

5. Verfahren nach einem der vorangegangenen Ansprüche 2 bis 4, **dadurch gekennzeichnet, dass** wenigstens eine der Folien eine Aluminiumfolie ist.

6. Verfahren nach einem der vorangegangenen Ansprüche 2 bis 5, **dadurch gekennzeichnet, dass** wenigstens eine der Folien aus einem Material ausgewählt ist aus der Gruppe Polyvinylchlorid, Cycloolefin-Copolymer, Polychlorotrifluorethylen, Polyethylen, Polypropylen, Polyethylenterephthalalt, Polycarbonate, Polyester, Polyacrylate und/oder Polyamide.

7. Verfahren nach Anspruch 1, **dadurch gekennzeichnet, dass** der Behälter ein geschlossener zweischichtiger, flaschenähnlicher Behälter mit einer steifen Außenhülle und einem nur punktuell mit der Außenhülle mechanisch verbundenen Innenbehälter, der gegenüber dem Außenbehälter in sich zusammenfallen kann.

8. Verfahren nach Anspruch 7, **dadurch gekennzeichnet, dass** der Behälter über ein Coextrusionsverfahren hergestellt worden ist.

9. Verfahren nach einem der Ansprüche 7 oder 8, **dadurch gekennzeichnet, dass** der Außenbehälter aus Polypropylen und der Innenbehälter aus Polyethylen bestehen.

10. Verfahren nach Anspruch 1, **dadurch gekennzeichnet, dass** der Behälter ein geschlossener und mit einem Flansch (12) versehener kollabierbarer Sack (11) ist.

11. Verfahren nach Anspruch 10, **dadurch gekennzeichnet, dass** der Sack (11) aus einer Metallfolie, wie z.B. einer Aluminiumfolie und/oder einer Kunststofffolie oder einer mit einem Kunststoff beschichteten Metallfolie besteht.

12. Verfahren nach einem der Ansprüche 10 oder 11, **dadurch gekennzeichnet, dass** der Sack (11) in einer Metallhülse eingebettet ist.

13. Verfahren nach einem der Ansprüche 7 bis 11, **dadurch gekennzeichnet, dass** der Behälter nach einem der Ansprüche 7 bis 9 durch Einführen einer Kanüle durch die Kappe (24) hindurch geöffnet wird oder der Behälter nach einem der Ansprüche 10 bis 12 durch Einführen einer Kanüle durch den Flansch (12) geöffnet wird.

14. Verfahren nach einem der vorangegangenen Ansprüche, **dadurch gekennzeichnet, dass** die Beaufschlagung bei einer Druckdifferenz von zwischen dem Inneren des Behälters und der Außenumgebung von 0,1 bis 10 bar, bevorzugt von 0,5 bis 5 bar angewandt, besonders bevorzugt zwischen 1 und 2 bar durchgeführt wird.

15. Verfahren nach Anspruch 14 **dadurch gekennzeichnet, dass** dieBeaufschlagungszeit nicht länger als 5 Stunden, bevorzugt nicht länger als 3 Stunden, besonders bevorzugt nicht länger als 1 Stunde und am stärksten bevorzugt zwischen 1 und 45 Minuten beträgt.

16. Verfahren nach einem der vorangegangenen Ansprüche 1 bis 3, **dadurch gekennzeichnet, dass** die Beaufschlagung durch Ausnutzung von Permeationseffekten bei einer Druckdifferenz von etwa null zwischen dem Inneren des Behälters und der Außenumgebung und/oder Diffusion bei nur geringen Druckdifferenzen zwischen dem Inneren und dem Äußeren des Behälters stattfindet.

17. Verfahren nach einem der vorangegangenen Ansprüche, **dadurch gekennzeichnet, dass** die Beaufschlagung bei einer Temperatur von 0°C bis 50 °C, bevorzugt zwischen 10°C und 30°C, am stärksten bevorzugt bei Raumtemperatur stattfindet.

18. Verfahren nach einem vorangegangenen Ansprüche, **dadurch gekennzeichnet, dass** das Beaufschlagungsgas ausgewählt wird aus der Gruppe Wasserstoff, Wasserdampf, Edelgase wie Helium, Neon, Argon, Krypton, Kohlendioxid, Stickstoff, Kohlenmonoxid, Kohlenstoff-Schwefelgase, Schwefeldioxid, Schwefelwasserstoff, Kohlenwasserstoffe wie Methan oder Ethan, Fluorkohlenwasserstoffe wie TG 134a oder TG 277, Fluorchlorkohlenwasserstoffe, bevorzugt aus der Gruppe der Edelgase, Kohlendioxid und Fluorkohlenwasserstoffe, besonders bevorzugt Helium.

19. Verfahren nach einem der vorangegangenen Ansprüche, **dadurch gekennzeichnet, dass** das Öffnen und die Entnahme des Gases in einem einzigen Schritt durchgeführt wird.

20. Verfahren nach einem der vorangegangenen Ansprüche 1 bis 10, **dadurch gekennzeichnet, dass** der Vorgang des Öffnens und der Entnahme des Gases zwei voneinander unabhängige Schritte darstellen.

21. Verfahren nach einem der vorangegangenen Ansprüche, **dadurch gekennzeichnet, dass** zum Öffnen bzw. zur Entnahme eine Vorrichtung in Form einer Kanüle mit einem angeschlossenen Schlauch verwendet wird.

## Claims

1. Method of checking the leaktightness of sealed containers,
wherein the sealed container is first acted upon from outside with a first gas which differs from a second gas enclosed within the container such that the increase in the quantity of the first gas inside the container can be analysed, and
then the container is opened in order to remove some of the gas from inside the container for qualitative and/or quantitative analysis,
**characterised in that**
- the container is a film container and comprises a chamber which contains a pharmaceutical active substance formulation inside it, and
- during the acting upon of the first gas, active substance formulation and the second gas are enclosed in the chamber of the film container, and
- the acting upon is carried out at absolute pressures in excess of 1 bar.

2. Method according to claim 1, **characterised in that** the film container consists of at least one covering film and one base film which may in turn consist of one or more layers, the covering film and the base film being firmly joined together along their periphery.

3. Method according to one of the preceding claims, **characterised in that** the film container is a blister (1).

4. Method according to one of the preceding claims 2 to 3, **characterised in that** the film material for each of the films is selected, independently of one another, from the group comprising metal foils, plastic films or composite films, or it is a layer of paper.

5. Method according to one of the preceding claims 2 to 4, **characterised in that** at least one of the films is an aluminium foil.

6. Method according to one of the preceding claims 2 to 5, **characterised in that** at least one of the films consists of a material selected from the group comprising polyvinyl chloride, cycloolefin copolymer, polychlorotrifluoroethylene, polyethylene, polypropylene, polyethylene terephthalate, polycarbonates, polyesters, polyacrylates and/or polyamides.

7. Method according to claim 1, **characterised in that** the container [is] a sealed, two-layer, bottle-like container with a rigid outer shell and an inner container mechanically attached to the outer shell only at certain points and able to collapse in on itself relative to the outer container.

8. Method according to claim 7, **characterised in that** the container has been produced by a coextrusion process.

9. Method according to one of claims 7 or 8, **characterised in that** the outer container consists of polypropylene and the inner container consists of polyethylene.

10. Method according to claim 1, **characterised in that** the container is a sealed collapsible bag (11) provided with a flange (12).

11. Method according to claim 10, **characterised in that** the bag (11) consists of a metal foil such as, for example, an aluminium foil and/or a plastic film or a plastic-coated metal foil.

12. Method according to one of claims 10 or 11, **characterised in that** the bag (11) is embedded in a metal sleeve.

13. Method according to one of claims 7 to 11, **characterised in that** the container according to one of claims 7 to 9 is opened by passing a cannula through the cap (24) or the container according to one of claims 10 to 12 is opened by passing a cannula through the flange (12).

14. Method according to one of the preceding claims, **characterised in that** the acting upon is carried out at a pressure difference between the interior of the container and the outer environment of 0.1 to 10 bar, preferably 0.5 to 5 bar, more preferably between 1 and 2 bar.

15. Method according to claim 14, **characterised in that** the acting upon time is not more than 5 hours, preferably not more than 3 hours, particularly preferably not more than 1 hour and most preferably between 1 and 45 minutes.

16. Method according to one of the preceding claims 1 to 3, **characterised in that** the acting upon is carried out by using permeation effects at a pressure difference of about zero between the interior of the container and the outer environment and/or diffusion with only slight pressure differences between the interior and exterior of the container.

17. Method according to one of the preceding claims, **characterised in that** the acting upon is carried out at a temperature of 0°C to 50°C, preferably between 10°C and 30°C, most preferably at ambient temperature.

18. Method according to one of the preceding claims, **characterised in that** the gas used for the acting upon is selected from the group comprising hydrogen, water vapour, noble gases such as helium, neon, argon, krypton, carbon dioxide, nitrogen, carbon monoxide, carbon-sulphur gases, sulphur dioxide, hydrogen sulphide, hydrocarbons such as methane or ethane, fluorohydrocarbons such as TG 134a or TG 227, chlorofluorohydrocarbons, preferably from the group comprising the noble gases, carbon dioxide and fluorohydrocarbons, most preferably helium.

19. Method according to one of the preceding claims, **characterised in that** the opening and the removal of the gas are carried out in a single step.

20. Method according to one of the preceding claims 1 to 10, **characterised in that** the process of opening and the removal of the gas represent two independent steps.

21. Method according to one of the preceding claims, **characterised in that** a device in the form of a cannula with a tube attached is used for the opening and removal.

## Revendications

1. Procédé de contrôle de l'étanchéité de contenants fermés,
le contenant fermé étant tout d'abord sollicité par un premier gaz distinct d'un second gaz logé dans le contenant jusqu'à ce que l'augmentation de la quantité du premier gaz à l'intérieur du contenant puisse être analysée puis le contenant étant ouvert pour prélever une partie du gaz depuis l'intérieur du contenant afin d'en effectuer l'analyse qualitative et/ou quantitative
**caractérisé en ce que**
- le contenant comprend un contenant filmé et une chambre dont l'intérieur renferme une formulation pharmaceutique de substance active, et
- pendant la sollicitation avec le premier gaz, la formulation de substance active et le second gaz sont logés dans la chambre du contenant filmé et
- la sollicitation est réalisée à des pressions absolues supérieures à 1 bar.

2. Procédé selon la revendication 1, **caractérisé en ce que** le contenant filmé est constitué d'au moins un film de recouvrement et d'un film de fond pouvant être eux-mêmes constitués d'une ou de plusieurs couches, le film de recouvrement et le film de fond étant solidarisés ensemble de manière permanente le long de leur circonférence.

3. Procédé selon l'une quelconque des revendications précédentes, **caractérisé en ce que** le contenant filmé est un habillage transparent (1).

4. Procédé selon l'une quelconque des revendications 2 à 3, **caractérisé en ce que** le matériau filmé pour chacun des films indépendamment les uns des autres est choisi dans le groupe constitué par les films métalliques, les films plastiques ou les films composites ou bien est une couche de papier.

5. Procédé selon l'une quelconque des revendications 2 à 4, **caractérisé en ce qu'**au moins un des films est un film d'aluminium.

6. Procédé selon l'une quelconque des revendications 2 à 5, **caractérisé en ce qu'**au moins l'un des films est constitué d'un matériau choisi dans le groupe constitué par le chlorure de polyvinyle, le copolymère de cyclo-oléfine, le polychlorotrifluoréthylène, le polyéthylène, le polypropylène, le polyéthylènetéréphtalate, les polycarbonates, les polyesters, les polyacrylates et/ou les polyamides.

7. Procédé selon la revendication 1, **caractérisé en ce que** le contenant est un contenant fermé à deux couches du type bouteille doté d'une enveloppe extérieure rigide et d'un récipient intérieur susceptible de se replier par rapport au récipient extérieur et relié mécaniquement uniquement par endroits à l'enveloppe extérieure.

8. Procédé selon la revendication 7, **caractérisé en ce que** le contenant a été fabriqué par un procédé de coextrusion.

9. Procédé selon l'une quelconque des revendications 7 ou 8, **caractérisé en ce que** le récipient extérieur est constitué de polypropylène et le contenant intérieur de polyéthylène.

10. Procédé selon la revendication 1, **caractérisé en ce que** le contenant est un sac repliable (11) fermé et pourvu d'une bride (12).

11. Procédé selon la revendication 10, **caractérisé en ce que** le sac (11) est constitué d'un film métallique, comme par exemple un film d'aluminium et/ou un film plastique, ou d'un film métallique revêtu d'une matière plastique.

12. Procédé selon l'une quelconque des revendications 10 ou 11, **caractérisé en ce que** le sac (11) est encastré dans un manchon métallique.

13. Procédé selon l'une quelconque des revendications 7 à 11, **caractérisé en ce que** le contenant selon l'une quelconque des revendications 7 à 9 est ouvert par introduction d'une canule à travers le capuchon (24) ou le contenant selon l'une quelconque des revendications 10 à 12 est ouvert par introduction d'une canule à travers la bride (12).

14. Procédé selon l'une quelconque des revendications précédentes, **caractérisé en ce que** la sollicitation est réalisée avec une différence de pression de 0,1 à 10 bar entre l'intérieur du contenant et l'environnement extérieur, appliquée de préférence de 0,5 à 5 bar, de manière particulièrement préférée comprise entre 1 et 2 bar.

15. Procédé selon la revendication 14, **caractérisé en ce que** le temps de sollicitation n'est pas supérieur à 5 heures, de préférence pas supérieur à 3 heures, de manière particulièrement préférée pas supérieur à 1 heure et idéalement compris entre 1 et 45 minutes.

16. Procédé selon l'une quelconque des revendications 1 à 3, **caractérisé en ce que** la sollicitation a lieu par utilisation d'effets de perméation dans le cas d'une différence de pression sensiblement nulle entre l'intérieur du contenant et l'environnement externe et/ou diffusion dans le cas de différences de pression très faibles entre l'intérieur et l'extérieur du contenant.

17. Procédé selon l'une quelconque des revendications précédentes, **caractérisé en ce que** la sollicitation a lieu à une température allant de 0°C à 50°C, de préférence comprise entre 10°C et 30°C, idéalement à température ambiante.

18. Procédé selon l'une quelconque des revendications précédentes, **caractérisé en ce que** le gaz de sollicitation est choisi dans le groupe constitué par l'hydrogène, la vapeur d'eau, les gaz nobles comme l'hélium, le néon, l'argon, le crypton, le dioxyde de carbone, l'azote, le monoxyde de carbone, le gaz carbone dont on a enlevé le soufre, le dioxyde de soufre, le sulfure d'hydrogène, les hydrocarbures comme le méthane ou l'éthane, les hydrocarbures fluorés comme TG 134a ou TG 277, les hydrochlorofluorocarbures, de préférence dans le groupe des gaz nobles, du dioxyde de carbone et des hydrocarbures fluorés, de manière particulièrement préférée l'hélium.

19. Procédé selon l'une quelconque des revendications précédentes, **caractérisé en ce que** l'ouverture et le prélèvement du gaz sont réalisés au cours d'une seule étape.

20. Procédé selon l'une quelconque des revendications 1 à 10, **caractérisé en ce que** les procédures d'ouverture et de prélèvement du gaz représentent deux étapes indépendantes.

21. Procédé selon l'une quelconque des revendications précédentes, **caractérisé en ce qu'**un dispositif sous forme de canule à laquelle est raccordé un tuyau est utilisé pour l'ouverture ou le prélèvement.
